# EUROPÄISCHE PATENTSCHRIFT

(11) **EP 3 564 543 B1**
(45) Veröffentlichungstag und Bekanntmachung des Hinweises auf die Patenterteilung: **06.08.2025**
(21) Anmeldenummer: 19170981.5
(22) Anmeldetag: 25.04.2019
(51) Int. Cl.: F16B 25/00, E04G 5/10

(54) **VERFAHREN UND SYSTEM MIT EINER SCHRAUBENFIXIERUNG EINES BAUTEILS MIT SCHRAUBKANAL**
METHOD AND SYSTEM COMPRISING A SCREW FIXING OF A COMPONENT WITH SCREW CHANNEL
PROCÉDÉ ET SYSTÉME DE FIXATION À VIS D'UN COMPOSANT POURVU DE CANAL À VIS

(30) Priorität: 02.05.2018 DE 102018206757
(43) Veröffentlichungstag der Anmeldung: 06.11.2019
(73) Patentinhaber: Hünnebeck GmbH, 40885 Ratingen (DE)
(72) Erfinder: Becker, Michael, 46562 Voerde (DE)
(74) Vertreter: Gille Hrabal Partnerschaftsgesellschaft mbB Patentanwälte

(56) Entgegenhaltungen:
- EP-A1- 1 635 077
- DE-A1- 102013 210 363
- DE-A1- 102015 110 088
- US-A1- 2007 169 311
- RK ROSE + KRIEGER PRODUKTÜBERSICHT ET AL: "Linear-Technik Verbindungs-Technik Profil-Technik Modul-Technik", MINDEN, 31 December 2017 (2017-12-31), Postdamerstrasse 9, pages 1 - 24, XP055716957, Retrieved from the Internet <URL:https://www.rk-rose-krieger.com/fileadmin/catalogue/produktuebersicht/produktuebersicht_de.pdf> [retrieved on 20200721]

## Beschreibung

Die Erfindung betrifft ein Verfahren zum Fixieren von Bauteilen mithilfe einer Schraube, die in einen Schraubkanal eines der Bauteile gedreht wird. Die Erfindung betrifft ferner ein System mit dem Bauteil und einer Schraube.

Bei Gerüsten für die Bauindustrie ist eine Vielzahl zumeist metallischer Bauteile miteinander zu montieren, um beispielsweise eine Treppe für ein Baugerüst zu erzeugen. Zum Herstellen einer Treppe wird in der Regel ein Wangenprofil seitlich an Stufen- und Plattformbauteile angeschraubt, die zu diesem Zweck häufig mit Schraubkanälen für die Schrauben ausgestattet sind.

Die Druckschriften US4395080A, US5156416A, EP2808565A1 und DE202014005332U1 offenbaren Bauteile, die mittels Schrauben fixiert werden können.

Die Druckschriften DE 10 2013210363 A1 und EP 1635077 A1 offenbaren ebenso Verfahren und Systeme zum Fixieren von Bauteilen mithilfe einer Schraube.

Es ist Aufgabe der Erfindung, ein weiterentwickeltes Verfahren und Bauteil bereitzustellen.

Zur Lösung der Aufgabe dienen ein Verfahren gemäß dem Anspruch 1 sowie ein System gemäß dem Anspruch 3. Vorteilhafte Ausführungsformen ergeben sich aus den Unteransprüchen.

Zur Lösung der Aufgabe dient ein Verfahren zum Fixieren eines weiteren Bauteils an einem Bauteil mithilfe einer metrischen oder zölligen Schraube. Das Bauteil umfasst einen Schraubkanal, der durch eine innere Mantelfläche im Querschnitt begrenzt wird. Die innere Mantelfläche weist eine Kante auf, die sich parallel zu einer Mittelachse des Schraubkanals erstreckt und im Querschnitt betrachtet zur Mittelachse hin ragt. Die Schraube wird für das Fixieren der beiden Bauteile in Richtung der Mittelachse in den Schraubkanal gedreht. Auf diese Weise wird ein Innengewinde in der Kante erzeugt, d.h., die Kante weist Unterbrechungen auf, so dass eine eingedrehte Schraube in Richtung der Mittelachse fixiert werden kann. Insbesondere ist die Kante im Querschnitt betrachtet eine Ecke oder Spitze. In einer alternativen oder ergänzenden Ausgestaltung ist die Kante stumpf oder abgerundet. Es ist grundsätzlich auch möglich, dass die Kante von einem länglichen, rechteckigen Körper gebildet wird und/oder die Kante eine von zwei Ecken eines rechteckigen Körper sind, die einen gleichen Abstand zur Mittelachse haben.

Mathematisch betrachtet erstreckt sich eine Kante linienförmig. Wenn im Folgenden der Begriff "Kante" in einem Zusammenhang benutzt wird, der eine dreidimensionale Form verlangt, so kann dies auf einen Kantenkörper bezogen werden, bei dem die Kante einschließlich eines sich von der Kante aus erstreckenden Teils oder Bereichs des Schraubkanals oder der inneren Mantelfläche umfasst ist, also eines Teils oder Bereichs in radialer Richtung von der Mittelachse weg.

Eine metrische oder zöllige Schraube ist eine Schraube, die zum Eindrehen in ein metrisches bzw. zölliges Muttergewinde vorgesehen ist. Eine metrische oder zöllige Schraube ist keine Spezialschraube, sondern wird nach DIN-Norm mittels Massenfertigung hergestellt und ist auf dem Markt frei verfügbar. Ein bevorzugtes Beispiel ist DIN EN ISO 4762 oder DIN 912 VG sowie DIN 13-1.

Eine Kante, in der ein Innengewinde erzeugt wird, indem die Schraube in den Schraubkanal gedreht wird, hatte zuvor kein Innengewinde. Durch das Drehen, d.h. Eindrehen, der metrischen oder zölligen Schraube in den Schraubkanal mit zur Mittelachse ragender Kante wird Material der Kante bzw. einem Kantenkörper verdrängt, so dass die Schraube eine in Richtung der Mittelachse betrachtet formschlüssige Verbindung herstellt. Die Kante wird also durch das metrische oder zöllige Außengewinde der Schraube so verformt, dass die Kante in Richtung der Mittelachse betrachtet in regelmäßigen Abständen Ausnehmungen aufweist, in welche das Außengewinde der Schraube eingreift. In einer Ausgestaltung gehört die Kante zu einem im Querschnitt betrachtet länglichen Kantenkörper, der sich in der Richtung der Längserstreckung des Kantenkörpers radial in Richtung der Mittelachse ausdehnt . Erfindungsgemäß, ist die Kante im Querschnitt betrachtet der Punkt mit dem kürzesten Abstand zur Mittelachse.

Durch die Einsparung eines Innengewindes kann das Bauteil mit besonders geringem Aufwand hergestellt werden. Weil ferner metrische oder zöllige Schraube eingesetzt werden, entfallen die Zusatzkosten und der Zusatzaufwand für die Herstellung von Sonderschrauben.

Ein weiterer Vorteil besteht darin, dass die erzeugte Schraubfixierung besonders zuverlässig lösbar und erneut fixierbar ist. Versuche haben gezeigt, dass die Schraubfixierung mindestens zwei bis drei Mal gelöst und erneut fixiert werden kann, ohne dass dabei nennenswerte Festigkeitsverluste der Schraubfixierung entstehen. Das durch Verformung mittels der metrischen oder zölligen Schraube erzeugte Innengewinde in der Kante ist nämlich besonders robust.

Auch wenn der Einsatz der fixierten Bauteile im normalen Betrieb kein Demontieren vorsieht, so wird hierdurch dennoch die Möglichkeit einer besonders einfachen Reparatur eröffnet. Wenn die Bauteile beispielsweise zum Herstellen einer Gerüsttreppe dienen, so kann es infolge einer Beschädigung einer Stufe zu einem Reparaturbedarf kommen. Bisher wurde eine Treppe dann mittels Abtrennen des defekten Bauteils und Anschweißen eines Ersatzbauteils repariert. Durch die vorliegende Erfindung wird es ermöglicht, das defekte Bauteil oder weitere Bauteil einfach durch Herausdrehen der Schraube zu lösen und nach dessen Austausch durch ein Ersatzbauteil wieder durch Eindrehen der Schraube zu fixieren.

In einer Ausführungsform ist zum Eindrehen der Schraube in den Schraubkanal eine manuelle Kraft, also Handkraft, ausreichend. Normalerweise wird ein Schraubenzieher oder Inbusschlüssel eingesetzt, mit dem die Schraube durch Handkraft eingedreht werden kann. Bei dem Eindrehen handelt es sich um das erste Drehen der Schraube in den Schraubkanal, wodurch das Innengewinde in der Kante erzeugt wird. Eine besonders einfache Montage und zugleich eine besonders hohe Tragfähigkeit der Schraubfixierung werden so ermöglicht.

Ein weiterer Aspekt der Erfindung, betrifft ein System gemäß dem Anspruch 3, umfassend ein Bauteil mit einem Schraubkanal zum Fixieren mittels einer Schraube, wobei der Schraubkanal durch eine innere Mantelfläche im Querschnitt begrenzt wird und die innere Mantelfläche eine Kante aufweist, die sich parallel zu einer Mittelachse des Schraubkanals erstreckt und im Querschnitt betrachtet zur Mittelachse hin ragt, insbesondere radial. Das Bauteil wird so mit besonders geringem Aufwand hergestellt und ein weiteres Bauteil besonders einfach an dem Bauteil mittels der Schraube fixiert. Die Kante weist keine Ausnehmungen zum Eingreifen einer Schraube, also eines Außengewindes der Schraube, auf. Die Kante ermöglicht, dass ein Innengewinde in der Kante oder einem Kantenkörper, der die Kante umfasst, erzeugt wird, wenn eine metrische oder zöllige Schraube für das Fixieren in Richtung der Mittelachse in den Schraubkanal gedreht, also eingedreht, wird. Eine Kante, die im Querschnitt betrachtet zur Mittelachse hin ragt, hat den geringsten Abstand zur Mittelachse von der gesamten inneren Mantelfläche.

In einer Ausführungsform ist die innere Mantelfläche im Querschnitt geschlossen. Ein Innengewinde oder Ausnehmungen zum Eingreifen eines Außengewindes der Schraube können so besonders zuverlässig in der Kante erzeugt werden, wenn eine metrische oder zöllige Schraube in den Schraubkanal gedreht bzw. eingedreht wird.

Eine im Querschnitt geschlossene Mantelfläche hat eine um die Mittelachse herum vollständig geschlossene Kontur. Eine geschlossene Kontur ist keine C-Form. Eine geschlossene Kontur weist keinen Spalt für ein Aufweiten des Schraubkanals beim Eindrehen der Schraube auf.

Durch das Vorsehen einer im Querschnitt geschlossenen Mantelfläche kann die Kante der Schraube beim Eindrehen nicht ausweichen. Ein besonders zuverlässiges Erzeugen eines Innengewindes oder entsprechender Ausnehmungen in der Kante durch ein Verformen der Kante und ein Verdrängen von Material der Kante kann so ermöglicht werden. Das so erzeugte Innengewinde oder in Richtung der Mittelachse beabstandeter Ausnehmungen als Gegenkontur zum Außengewinde der metrischen oder zölligen Schraube sind daher besonders robust und formstabil. Ein mindestens zwei- oder dreifaches Lösen und Fixieren, d.h. Eindrehen, mittels der Schraube wird so ermöglicht, ohne dass die Festigkeit der Schraubenfixierung nennenswert geringer wird.

In einer Ausführungsform sieht der Schraubkanal im Querschnitt auf beiden Seiten von der Kante oder einem Kantenkörper jeweils einen Freiraum vor. Der Freiraum ermöglicht, dass Material von der Kante seitlich durch das Außengewinde der Schraube beim Eindrehen verdrängt werden kann. Ein besonders einfaches Eindrehen der Schraube und ein zuverlässiges Erzeugen eines Innengewindes in der Kante kann so erreicht werden.

Erfindungsgemäß sind mindestens drei und insbesondere höchstens acht Kanten vorgesehen, die sich parallel zur Mittelachse erstrecken und im Querschnitt betrachtet zur Mittelachse hin ragen. Durch das Vorsehen von drei Kanten können durch die Schraubenfixierung Kräfte gleichmäßig aufgenommen werden. Vorzugsweise sind mindestens vier Kanten vorgesehen. Eine besonders robuste Schraubenfixierung kann so sichergestellt werden, insbesondere bei den typischen Belastungen beim Einsatz in Baugerüsten. In einer Ausgestaltung sind höchstens fünfzehn Kanten vorgesehen. Ausreichend Raum für verdrängtes Material beim Eindrehen der Schraube kann dadurch bereitgestellt werden.

In einer Ausführungsform sind genau vier Kanten vorgesehen. Gemeint sind auch hier Kanten, die sich parallel zur Mittelachse erstrecken und im Querschnitt betrachtet zur Mittelachse hin ragen. Material kann so eingespart werden und dennoch eine robuste Schraubenfixierung erhalten werden. Es wurde erkannt, dass durch genau vier Kanten Kräfte aller Orientierungen wie z.B. Diagonalkräfte zuverlässig durch die Schraubenfixierung und die Kanten aufgenommen werden können. Verglichen mit einem vollumfänglichen Innengewinde kann daher durch das Vorsehen eines Schraubkanals mit genau vier Kanten eine Leichtbauweise ohne vorgefertigtes Innengewinde realisiert und besonders leichte Bauteile mit geringem Herstellungs- und montageaufwand bereitgestellt werden.

In eine Ausführungsform sind die Kanten baugleich. Baugleiche Kanten sind normalerweise zumindest baugleich geformt und/oder haben gleiche Abmessungen. Ein besonders gleichmäßiges Eindrehen entlang der Mittelachse und ein besonders gleichmäßiges Aufnehmen von Kräften durch die Schraubenfixierung können so ermöglicht werden.

Insbesondere sind Kantenkörper mit jeweils einer Kante einschließlich einem zur Mittelachse ragenden Teil oder Bereich des Schraubenkanals oder der inneren Mantelfläche baugleich. Vorzugsweise sind der Teil oder der Bereich dreieckförmig. In einer Ausgestaltung erstrecken sich die der Teil oder der Bereich jeweils von einer Kante bis zu einem größten Innendurchmesser der inneren Mantelfläche. Die Kantengeometrie ist bei baugleichen oder baugleich geformten Kanten oder Kantenkörpern gleich.

In eine Ausführungsform weisen die Kanten einen identischen Abstand zur Mittelachse auf. Die Schraube wird auf diese Weise automatisch entlang der Mittelachse durch die Kanten zentriert.

In eine Ausführungsform sind die Kanten in bevorzugt identischen Winkelabständen zueinander um die Mittelachse herum angeordnet. Ein besonders gleichmäßiges Eindrehen entlang der Mittelachse und ein besonders gleichmäßiges Aufnehmen von Kräften durch die Schraubenfixierung können so ermöglicht werden.

In einer Ausführungsform ist die gesamte innere Mantelfläche zur Mittelachse im Querschnitt betrachtet punktsymmetrisch ist. Die Querschnittskontur der inneren Mantelfläche bildet sich also in bestimmten Winkelstellungen zur Mittelachse auf sich selbst ab, insbesondere bei 0°, 90°, 180° und 270°. Ein besonders zuverlässiges und gleichmäßiges Aufnehmen von Kräften durch die Schraubenfixierung kann so ermöglicht werden.

Insbesondere ist die innere Mantelfläche oder Kantenkörper im Querschnitt betrachtet spiegelsymmetrisch zu einer Ebene, auf der die Mittelachse und die Kante liegen. Vorzugsweise ist dabei die innere Mantelfläche im Querschnitt betrachtet spiegelsymmetrisch zu einer weiteren Ebene, die senkrecht auf der zuvor erwähnten Ebene steht und auf der ebenfalls die Mittelachse liegt. Ein besonders gleichmäßiges Eindrehen entlang der Mittelachse und ein besonders gleichmäßiges Aufnehmen von Kräften durch die Schraubenfixierung können so ermöglicht werden.

In einer Ausführungsform wird die Kante durch zwei ebene und zueinander abgewinkelte Flächen gebildet, die unter Ausformung der Kante aufeinandertreffen. Ein gleichmäßiges Erzeugen des Innengewindes beim Eindrehen der Schraube kann so erreicht werden. Das Innengewinde umfasst eine Vielzahl voneinander in Richtung der Mittelachse beabstandeter Ausnehmungen, die sich von der einen Fläche bis zur anderen dazu abgewinkelten Fläche erstrecken. Jede Ausnehmung unterbricht dabei die Kante, d.h. den sonst bevorzugt geradlinigen Kantenverlauf.

In einer Ausführungsform sind der Schraubkanal und/oder die innere Mantelfläche so beschaffen, dass durch das Eindrehen einer metrischen oder zölligen Schraube in den Schraubkanal in Richtung der Mittelachse ein Innengewinde in Form von Ausnehmungen in der Kante oder einem Kantenkörper erzeugt wird. Das Bauteil kann so mit besonders geringem Herstellungsaufwand bereitgestellt werden.

Die Ausnehmungen haben jeweils die Gegenkontur zu einer Flanke oder zumindest eines äußeren Teils der Flanke des Außengewindes der metrischen oder zölligen Schraube. Die in der Kante erzeugte Ausnehmung ist in einer Ausgestaltung im Längsschnitt entlang der Mittelachse betrachtet dreieckförmig oder trapezförmig. In einer Ausgestaltung hat das Innengewinde in der Kante oder dem Kantenkörper eine Zickzack-Form.

In einer Ausführungsform wurde das Bauteil durch Strangpressen oder Extrusion hergestellt. Ein Bauteil mit einem Schraubkanal, der in Richtung der Mittelachse eine konstante Querschnittskontur aufweist, kann so besonders einfach und mit relativ geringem Aufwand hergestellt werden. Erfindungsgemäß ist das Bauteil aus Aluminium oder faserverstärktem Kunststoff hergestellt. Ergänzend kann das Bauteil aus Stahl, insbesondere Stahlguss oder Edelstahl, z.B. 1.4301 oder 1.4310, hergestellt sein.

In einer Ausgestaltung ist das Bauteil eine Treppenstufe oder ein Plattformbauteil für eine Gerüsttreppe. Eine Leichtbau-Treppe kann so mit besonders geringem Aufwand für ein Baugerüst bereitgestellt werden.

Das System umfasst das Bauteil gemäß einer der oben beschriebenen Ausführungsformen. Das System umfasst ferner eine metrische oder zöllige Schraube. Das System ist so beschaffen, dass die metrische oder zöllige Schraube zum Fixieren des Bauteils in Richtung der Mittelachse in den Schraubkanal des Bauteils gedreht und auf diese Weise ein Innengewinde in der Kante oder einem Kantenkörper erzeugen werden kann.

Eine zöllige Schraube hat beispielsweise ein sogenanntes Whitworth-Gewinde. Eine metrische und zöllige Schraube sind wie bereits erwähnt zum Einschrauben in ein Muttergewinde oder eine Mutter konfiguriert. Eine metrische oder zöllige Schraube ist keine Blechschraube, keine Universalschraube, keine Schnellbauschraube und keine Holzschraube. Die aufgezählten Schrauben sind nämlich nicht dazu konfiguriert, in ein metrisches oder zölliges Muttergewinde eingeschraubt zu werden.

Bevorzugt ist die metrische oder zöllige Schraube eine Stahlbauschraube. Eine besonders preiswerte Schraubfixierung kann so realisiert werden.

Besonders bevorzugt ist die metrische oder zöllige Schraube eine Vollgewindeschraube. Dadurch kann die Schraube bis zum Anschlag gegen das Bauteil oder das weitere Bauteil eingedreht werden. Beispielsweise kann so ein weiteres Bauteil, das mittels der Schraube an dem Bauteil fixiert wird, unter Vorspannung gegen das Bauteil fixiert werden.

In einer Ausführungsform beträgt der Abstand von der Kante zur Mittelachse mindestens 70%, bevorzugt mindestens 81%, besonders bevorzugt mindestens 83 und/oder höchstens 95%, bevorzugt höchstens 90%, des halben Außengewinde-Nenndurchmessers der Schraube. Der halbe Außengewinde-Nenndurchmesser entspricht einem Außengewinde-Nennradius. Der Abstand von der Kante zur Mittelachse ist von einem Punkt der Kante zu messen, der am nächsten an der Mittelachse liegt, bevorzugt von einer nach innen ragenden Spitze. Ein manuelles Eindrehen der Schraube und eine hinreichende Tragfähigkeit können auf diese Weise gleichzeitig besonders zuverlässig erzielt werden. Der Abstand von der Kante zur Mittelachse ist der geringste Abstand, der im Querschnitt betrachtet zwischen der Kante und der Mittelachse gemessen werden kann. Insbesondere entspricht der Abstand dem Radialabstand. Ab einem Abstand von der Kante zur Mittelachse von mindestens 81% braucht der Kern des Gewindes der Schraube kein Material der Kante oder des Kantenkörpers zu verdrängen, so dass ein besonders einfaches Eindrehen ermöglicht werden kann. Bis zu einem Abstand von der Kante zur Mittelachse kleiner als 81%, der in einer Ausgestaltung vorgesehen ist, wird das Eindrehen erschwert, jedoch eine besonders hohe Festigkeit der Schraubverbindung erzielt.

Insbesondere haben die Ausnehmungen in der Kante, welche durch das Eindrehen der Schraube erzeugt wurden und die das Innengewinde bilden, eine Tiefe von mindestens 5%, bevorzugt 10%, und/oder höchstens 30%, bevorzugt höchstens 20%, von dem halben Außengewinde-Nenndurchmesser der Schraube. Ein Ausformen des Innengewindes durch Verdrängen und umformen des Materials der Kante kann so ermöglicht werden, wobei das verdrängte Material in den Freiraum ausweichen kann.

In einer Ausführungsform beträgt der Abstand von der Kante zur Mittelachse mindestens 102% und/oder höchstens 117% oder 108% des halben Außengewinde-Kerndurchmessers der Schraube. Der halbe Außengewinde-Kerndurchmesser entspricht einem Außengewinde-Kernradius. Das Verformen des Materials der Kante hindert dadurch nicht merklich das Eindrehen. Der Abstand von der Kante zur Mittelachse ist der geringste Abstand, der im Querschnitt betrachtet zwischen der Kante und der Mittelachse gemessen werden kann. Insbesondere entspricht der Abstand dem Radialabstand.

In einer Ausgestaltung beträgt der Abstand von der Kante zur Mittelachse mindestens 86% und/oder höchstens 100% des halben Außengewinde-Kerndurchmessers der Schraube. Dadurch kann eine besonders hohe Festigkeit der Schraubverbindung erzielt werden.

Nachfolgend werden Ausführungsbeispiele der Erfindung auch anhand von Figuren näher erläutert. Merkmale der Ausführungsbeispiele und weiterer nachfolgend beschriebener alternativer oder ergänzender Ausgestaltungen können kombiniert werden im Rahmen, der durch die beigefügten Ansprüche definiert ist.

Es zeigen:
- Figur 1:: Schematische Querschnittsdarstellung eines Ausschnitts eines Bauteils mit einem Schraubkanal zum Fixieren einer Schraube;
- Figur 2:: Schematische Darstellung einer metrischen Schraube im Längsschnitt;
- Figur 3:: Isometrische Darstellung eines Bauteils, an das ein weiteres Bauteil mittels Schrauben fixiert ist.

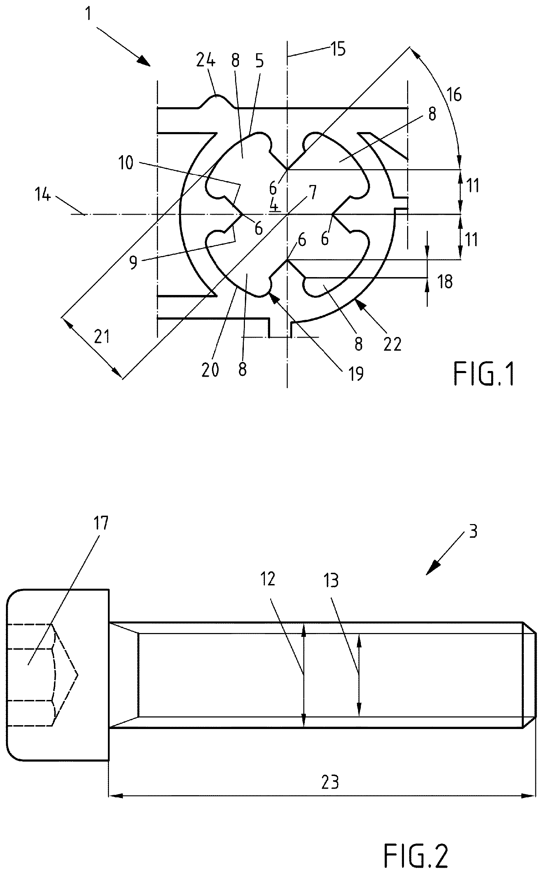

Die Figur 1 zeigt einen Ausschnitt eines Bauteils 1 mit einem Schraubkanal 4 im Querschnitt. Der Schraubkanal 4 wird durch eine innere Mantelfläche 5 definiert und begrenzt. Die innere Mantelfläche 5 bildet vier Kanten 6 aus, die sich parallel zu einer Mittelachse 7 des Schraubkanals 4 erstrecken und im Querschnitt betrachtet zur Mittelachse 7 hin ragen. Die Mittelachse 7 verläuft wie das Querschnittsprofil in Figur 1 in Blickrichtung.

Die Kontur der inneren Mantelfläche 5 umgibt geschlossen die Mittelachse 7, die im Querschnitt betrachtet das Symmetriezentrum für die insbesondere punktsymmetrische Kontur der Mantelfläche 5 bildet. In Figur 1 sind zudem eine horizontale Symmetrieebene 14 und eine dazu senkrechte vertikale Symmetrieebene 15 eingezeichnet. Die innere Mantelfläche 5 ist vorzugsweise spiegelsymmetrisch zu der horizontalen Symmetrieebene 14 und/oder der vertikalen Symmetrieebene 15.

Die vier Kanten 6 sind baugleich, weisen einen identischen Abstand 11 zur Mittelachse 7 auf und sind in identischen Winkelabständen von 90° zueinander um die Mittelachse 7 herum angeordnet. Jede Kante 6 ist vorzugsweise spiegelsymmetrisch zu der horizontalen Symmetrieebene 14 oder der vertikalen Symmetrieebene 15. Jede Kante 6 wird durch zwei ebene und zueinander abgewinkelte Flächen 9, 10 gebildet, die unter Ausformung der jeweiligen Kante 6 aufeinandertreffen.

In einer Ausgestaltung beträgt ein Winkel zwischen zwei ebenen Flächen 9, 10, welche die Kante 6 bilden, mindestens 10° und/oder höchstens 190°. Ein Innengewinde kann so zuverlässige erzeugt werden. Insbesondere gehören die zwei Flächen 9, 10 zu einem Kantenkörper. In einer Ausgestaltung wird die Kante 6 ausschließlich durch einen im Wesentlichen dreieckförmigen Kantenkörper gebildet, bei dem die Kante 6 im Querschnitt betrachtet der einzige Punkt mit einem kürzesten Abstand zur Mittelachse ist, d.h., es gibt keine zwei Punkte oder zwei Kanten eines selben Kantenkörpers mit einem gleichen Abstand zur Mittelachse, der gleichzeitig der kürzeste Abstand des Kantenkörpers zur Mittelachse ist. In einer Ausgestaltung liegt die Kante 6 auf einer Längsachse in Längsausdehnung des Kantenkörpers, der sich in Richtung der Längsachse zur Mittelachse ragt, wobei die Längsachse im Wesentlichen insbesondere mittig zur Querausdehnung des Kantenkörpers verläuft.

In einer Ausgestaltung beträgt der Winkel 16 zwischen einer Symmetrieebene 14 und einer ebenen Fläche 10, welche die Kante 6 bildet, mindestens 10° und/oder höchstens 80°. In einem nicht dargestellten Beispiel kann der Winkel 16 grundsätzlich 0° betragen, so dass beispielsweise ein quaderförmiger Block vorgesehen ist, der im Querschnitt betrachtet auf beiden Seiten jeweils einen Freiraum 8 vorsieht, der sich an eine Kante anschließt.

Der Schraubkanal 4 der Figur 1 ist zum Fixieren mit einer metrischen Schraube 3 der Größe M8 als der Außengewinde-Nenndurchmessers 12 konfiguriert, wie exemplarisch in Figur 2 im Längsschnitt gezeigt. Der Außengewinde-Kerndurchmesser 13 beträgt bei einer M8 Schraube 6,47 mm nach DIN 13-1. Bevorzugt wird eine DIN 912 Zylinderkopfschraube VG mit Innensechskant 17 eingesetzt. Die Schraube 3 kann so sehr eng an eine benachbarte Wandung des weiteren Bauteils 2 eingedreht werden, die sonst das Ansetzen eines Werkezeugs für die Schraube behindern würde.

Der Schraubkanal 4 der Figur 1 ist grundsätzlich skalierbar, so dass ein proportional kleinerer oder größerer Schraubkanal 4 für metrische oder zöllige Schrauben 3 mit einem entsprechend größeren oder kleineren Außengewinde-Nenndurchmessers 12 in gleicher Weise eingesetzt werden kann.

Das im Folgenden beschriebene Ausführungsbeispiel mit einem Schraubkanal 4 wie Figur 1 gezeigt und einer dazu passenden Schraube 3 wie in Figur 2 gezeigt ist daher rein exemplarisch zu verstehen.

Die vier Kanten 6 des Schraubkanals 4 der Figur 1 haben alle einen Abstand 11 von insbesondere ca. 3,4 mm von der Mittelachse 7. Die Kanten 6 haben den geringsten Abstand zur Mittelachse 7 von der gesamten inneren Mantelfläche 5. Die ebenen Flächen 9, 10 schließen vorzugsweise einen ca. 90°-Winkel zueinander ein. In einer bezogen auf die Mittelachse 7 radialen Distanz 18 von insbesondere ca. 1 mm von der Kante 6 schließt sich an die ebenen Flächen 9, 10 ein bogenförmiger Abschnitt 19 an. Vorzugsweise hat der bogenförmige Abschnitt 19 einen Radius von ca. 1,5 mm und bildet einen Teil des Freiraums 8. Insbesondere geht der bogenförmige Abschnitt 19 in einen weniger gekrümmten Konturabschnitt 20 über, der ebenfalls einen Teil des Freiraums 8 definiert und begrenzt. Insbesondere hat der Konturabschnitt 20 einen Mittelachsenabstand 21 zur Mittelachse 7 von ca. 6,7 mm.

Insbesondere hat der Schraubkanal 4 ungefähr die Querschnittsform eines vierblättrigen Kleeblattes.

Vorzugsweise ist der Schraubkanal 4 in einen im Wesentlichen zylinderförmigen Grundkörper eingebracht, der insbesondere einen Außendurchmesser 22 von mindestens 15 mm und/oder höchstens 25 mm, besonders bevorzugt ca. 17 mm aufweist. Insbesondere ist der Grundkörper unterhalb oder tangential zu einem plattenförmigen Bereich des Bauteils angeordnet. Ein Bauteil mit Schraubkanal 4 kann so besonders einfach in Leichtbauweise hergestellt werden.

In einer Ausgestaltung ist die innere Mantelfläche 5 geschlossen und hat eine Mindestdicke von 20% des Außengewinde-Nenndurchmessers 12 der Schraube 3. Bei einer M8-Schraube ist die Mindestdicke dann z.B. 1,6 mm. Dadurch, dass die innere Mantelfläche 5 geschlossen ist, kann eine besonders geringe Mindestdicke eingesetzt werden, die dennoch die mechanischen Anforderungen erfüllt. Material und Baugewicht können so eingespart werden.

Insbesondere hat die Schraube 3 eine Nennlänge 23 von mindestens 20 mm und/oder höchstens 100 mm. Besonders bevorzugt ist eine Nennlänge 23 von 30 mm. Insbesondere ist die Schraube 3 eine M8x30mm-Schraube. Vorzugsweise ist die Schraube aus Stahl, insbesondere mit einer verzinkten Oberfläche.

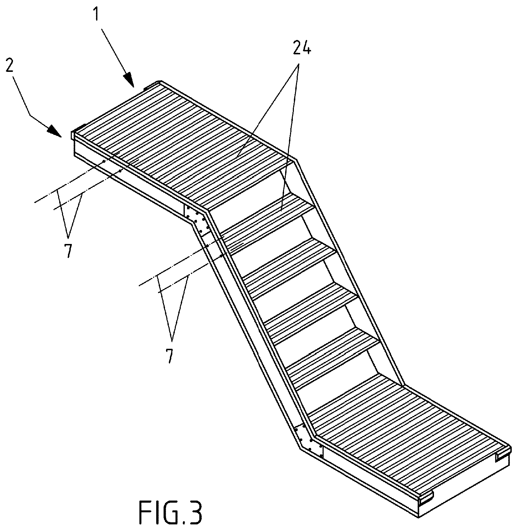

In Figur 3 werden Beispiele für das Bauteil 1 und das weitere Bauteil 2 gezeigt, die im fixierten Zustand in diesem exemplarischen Ausführungsbeispiel eine Treppe für ein Baugerüst oder eines Teils davon bilden.

Insbesondere ist das weitere Bauteil 2 ein Wangenprofil und/oder das Bauteil 1 ein Stufen- und/oder Plattformbauteil. Das Wangenprofil wird mittels Schrauben 3, insbesondere der Figur 2, seitlich an einem Stufen- und/oder Plattformbauteil fixiert. Dazu wird eine Schraube 3 durch eine Durchgangsöffnung in dem weiteren Bauteil 2 gesteckt und in den Schraubkanal 4 des Bauteils 1 gedreht, wodurch ein Innengewinde in den Kanten 6 erzeugt wird.

In Figur 3 sind exemplarisch an einem Plattformbauteil und einem Stufenbauteil die Mittelachsen 7 für jeweils zwei Schraubkanäle 4 eingezeichnet. Bereits zwei Schraubkanäle 4 genügen daher, um das Wangenprofil mit einem Stufenbauteil hinreichend fixiert zu verbinden.

Die in Figur 3 erkennbare Plattform setzt sich aus mehreren Plattformbauteilen zusammen. Anti-Rutsch-Rippen 24, die auch in der Vergrößerung der Figur 1 erkennbar sind, werden auf den betretbaren Oberflächen vorgesehen, um ein Ausrutschen einer Person zu vermeiden.

In einer Ausführungsform wird die Kante 6 durch zwei zueinander abgewinkelte Flächen 9, 10 gebildet, die unter Ausformung der Kante 6 aufeinandertreffen. Im Querschnitt zur Mittelachse 7 betrachtet, trifft die Fläche 9 unter einer gleichen Winkeldifferenz auf die Kante 6 wie die andere Fläche 10, wobei die Winkeldifferenz zwischen der jeweilige Fläche 9, 10 und einer Ebene 14 gemessen wird, die durch die Mittelachse 7 und die Kante 6 verläuft. Die Ebene 14 ist also die Symmetrieebene für die Erstreckung der Flächen 9, 10 beim Aufeinandertreffen in der Kante 6. Dies ermöglicht das Ausbilden eines dreieckartigen Kantenkörpers, so dass die Schraube ausgehend von der Kante 6 radial nach außen in den Schraubkanal 4 schneiden kann, um das Innengewinde zu erzeugen.

In einer Ausführungsform wird (im Querschnitt zur Mittelachse 7 betrachtet) die Kante 6 durch zwei aufeinandertreffende Flächen 9, 10 gebildet, die zu einer Symmetrieebene 14 symmetrisch verlaufen, wobei die Symmetrieebene 14 durch die Mittelachse 7 und die Kante 6 verläuft. Die Mittelachse 7 und die Kante 6 liegen also in der Symmetrieebene 14. Ein Schneiden des Innengewindes durch die Schraube kann dadurch mit einem stetig ansteigenden Drehwiderstand für den Benutzer ermöglicht werden. Zu Anfang ist dabei der Drehwiderstand infolge der Kante 6 aus zwei aufeinandertreffenden Flächen 9, 10 vergleichsweise gering und steigt dann stetig und steil mit zunehmendem Volumen des zu verdrängenden Materials an. Das Eindrehen kann auf diese Weise für den Benutzer spürbar erleichtert werden, beispielsweise im Vergleich zu einem trapezförmigen Kantenkörper. Bei einem trapezförmigen Kantenkörper müsste die Schraube zu Anfang nicht in eine Kante, sondern in eine Plateau-Fläche des trapezförmigen Kantenkörper schneiden, so dass gleich zu Anfang eine sehr große Kraft erforderlich wäre. In einer Ausgestaltung umfasst die innere Mantelfläche 5 im Querschnitt betrachtet keine trapezartige oder trapezförmige Kontur zum Einschneiden eines Innengewindes durch eine Schraube.

In der Erfindung sind mindestens drei Kanten 6 vorgesehen, die sich parallel zur Mittelachse 7 erstrecken, im Querschnitt betrachtet zur Mittelachse 7 hin ragen und gemeinsam einen kleinsten inneren Durchmesser des Schraubkanals 4 bilden, d.h., vor einem Scheiden eines Innengewindes durch eine Schraube. Es wird so ermöglicht, dass eine Schraube, die in den Schraubkanal 4 gedreht wird, zu Anfang ausschließlich die Kanten 6 berührt, d.h., nicht auf einer Fläche aufsetzt. Die Schraube braucht dadurch zu Anfang lediglich in Kanten 6 geschnitten werden, nicht jedoch in eine ebene Oberfläche, was mit einem zu Anfang höheren Kraftaufwand verbunden wäre.

Erfindungsgemäß ist die metrische oder zöllige Schraube 3 aus einem Metall hergestellt, das eine höhere Härte als Aluminium hat. Insbesondere ist die Schraube 3 aus Stahl hergestellt, besonders bevorzugt aus Edelstahl.

## Patentansprüche

1. Verfahren zum Fixieren eines weiteren Bauteils (2) an einem Bauteil (1) mithilfe einer metrischen oder zölligen Schraube (3), die zum Eindrehen in ein metrisches bzw. zölliges Muttergewinde vorgesehen ist, wobei die Schraube (3) aus einem Metall hergestellt ist, das eine höhere Härte als Aluminium hat, wobei das Bauteil (1) einen Schraubkanal (4) umfasst, der durch eine innere Mantelfläche (5) im Querschnitt begrenzt wird, wobei die innere Mantelfläche (5) eine Kante (6) aufweist, die sich parallel zu einer Mittelachse (7) des Schraubkanals (4) erstreckt und im Querschnitt betrachtet zur Mittelachse (7) hin ragt, nämlich den geringsten Abstand zur Mittelachse (7) von der gesamten inneren Mantelfläche (5) hat, wobei die Mittelachse (7) senkrecht zu der Oberfläche des Bauteils (1) verläuft durch welche die Schraube (3) eingedreht wird, wobei die Schraube (3) für das Fixieren der beiden Bauteile (1, 2) in Richtung der Mittelachse (7) in den Schraubkanal (4) gedreht wird und auf diese Weise ein Innengewinde in der Kante (6) erzeugt, wobei das Bauteil aus Aluminium oder faserverstärktem Kunststoff hergestellt ist, wobei mindestens drei Kanten (6) vorgesehen sind, die sich parallel zur Mittelachse (7) erstrecken und im Querschnitt betrachtet zur Mittelachse (7) hin ragen.

2. Verfahren nach dem vorhergehenden Anspruch, **dadurch gekennzeichnet, dass** zum Eindrehen der Schraube (3) in den Schraubkanal (4) eine manuelle Kraft ausreichend ist.

3. System umfassend ein Bauteil (1), eine metrische oder zöllige Schraube (3), die zum Eindrehen in ein metrisches bzw. zölliges Muttergewinde vorgesehen ist, wobei die Schraube (3) aus einem Metall hergestellt ist, das eine höhere Härte als Aluminium hat, sowie ein weiteres Bauteil (2), wobei das weitere Bauteil (2) mithilfe der Schraube (3) an dem Bauteil (1) fixiert ist, wobei das Bauteil (1) einen Schraubkanal (4) zum Fixieren mittels einer Schraube (3) aufweist, wobei der Schraubkanal (4) durch eine innere Mantelfläche (5) im Querschnitt begrenzt wird und die innere Mantelfläche (5) eine Kante (6) aufweist, die sich parallel zu einer Mittelachse (7) des Schraubkanals (4) erstreckt und im Querschnitt betrachtet zur Mittelachse (7) hin ragt, nämlich den geringsten Abstand zur Mittelachse (7) von der gesamten inneren Mantelfläche (5) hat, wobei die Mittelachse (7) senkrecht zu der Oberfläche des Bauteils (1) verläuft, durch welche die Schraube (3) eingedreht ist, wobei das System so beschaffen ist, dass die metrische oder zöllige Schraube (3) zum Fixieren des Bauteils (1) in Richtung der Mittelachse (7) in den Schraubkanal (4) des Bauteils (1) gedreht und auf diese Weise ein Innengewinde in der Kante (6) erzeugt worden ist, wobei das Bauteil aus Aluminium oder faserverstärktem Kunststoff hergestellt ist, wobei mindestens drei Kanten (6) vorgesehen sind, die sich parallel zur Mittelachse (7) erstrecken und im Querschnitt betrachtet zur Mittelachse (7) hin ragen.

4. System nach dem vorhergehenden Anspruch, **dadurch gekennzeichnet, dass** die innere Mantelfläche (5) im Querschnitt geschlossen ist.

5. System nach einem der zwei vorhergehenden Ansprüche, **dadurch gekennzeichnet, dass** der Schraubkanal (4) im Querschnitt auf beiden Seiten von der Kante (6) jeweils einen Freiraum (8) vorsieht.

6. System nach dem Anspruch 3, **dadurch gekennzeichnet, dass** genau vier Kanten (6) oder höchstens acht Kanten (6) vorgesehen sind.

7. System nach einem dem vorhergehenden Anspruch, **dadurch gekennzeichnet, dass** die Kanten (6) baugleich sind, einen identischen Abstand (11) zur Mittelachse (7) aufweisen und/oder in bevorzugt identischen Winkelabständen zueinander um die Mittelachse (7) herum angeordnet sind.

8. System nach einem der fünf vorhergehenden Ansprüche, **dadurch gekennzeichnet, dass** die gesamte innere Mantelfläche (5) zur Mittelachse (7) im Querschnitt betrachtet punktsymmetrisch ist.

9. System nach einem der sechs vorhergehenden Ansprüche, **dadurch gekennzeichnet, dass** die Kante (6) durch zwei ebene und zueinander abgewinkelte Flächen (9, 10) gebildet wird, die unter Ausformung der Kante (6) aufeinandertreffen.

10. System nach einem der sieben vorhergehenden Ansprüche, **dadurch gekennzeichnet, dass** das Bauteil (1) durch Strangpressen oder Extrusion hergestellt wurde.

11. System nach einem der acht vorhergehenden Ansprüche, **dadurch gekennzeichnet, dass** der Abstand (11) von der Kante (6) zur Mittelachse (7) mindestens 70% und/oder höchstens 95% des halben Außengewinde-Nenndurchmessers (12) der Schraube (3) beträgt.

12. System nach einem der neun vorhergehenden Ansprüche, **dadurch gekennzeichnet, dass** der Abstand (11) von der Kante (6) zur Mittelachse (7) mindestens 86% oder mindestens 102% und/oder höchstens 108% oder höchstens 117% des halben Außengewinde-Kerndurchmessers (13) der Schraube (3) beträgt.

## Claims

1. Method for fixing a further component (2) to a component (1) by means of a metric or imperial screw (3) which is intended for screwing into a metric or imperial nut thread, respectively, wherein the screw (3) is made of a metal which has a higher hardness than aluminium, wherein the component (1) comprises a screw channel (4) which is limited in cross-section by an inner lateral surface (5), wherein the inner lateral surface (5) has an edge (6) which extends parallel to a central axis (7) of the screw channel (4) and projects towards the central axis (7) when viewed in cross-section, namely has the smallest distance to the central axis (7) of the entire inner lateral surface (5),
wherein the central axis (7) extends perpendicular to the surface of the component (1) through which the screw (3) is screwed in, wherein the screw (3) is rotated in the direction of the central axis (7) into the screw channel (4) for fixing the two components (1, 2) and in this way produces an internal thread in the edge (6), wherein the component is produced from aluminium or fibre-reinforced plastic, wherein at least three edges (6) are provided which extend parallel to the central axis (7) and project towards the central axis (7) when viewed in cross-section.

2. Method according to the preceding claim, **characterised in that** a manual force is sufficient for screwing the screw (3) into the screw channel (4).

3. System comprising a component (1), a metric or imperial screw (3) which is intended for screwing into a metric or imperial nut thread, respectively, wherein the screw (3) is made of a metal which has a higher hardness than aluminium, and a further component (2), wherein the further component (2) is fixed to the component (1) by means of the screw (3), wherein the component (1) comprises a screw channel (4) for fixing by means of a screw (3), wherein the screw channel (4) is limited in cross-section by an inner lateral surface (5) and the inner lateral surface (5) has an edge (6) which extends parallel to a central axis (7) of the screw channel (4) and projects towards the central axis (7) when viewed in cross-section, namely has the smallest distance to the central axis (7) of the entire inner lateral surface (5), wherein the central axis (7) runs perpendicular to the surface of the component (1) through which the screw (3) is screwed, the system being such that the metric or imperial screw (3) for fixing the component (1) has been rotated in the direction of the central axis (7) into the screw channel (4) of the component (1) and in this way an internal thread has been produced in the edge (6), wherein the component is produced from aluminium or fibre-reinforced plastic, wherein at least three edges (6) are provided which extend parallel to the central axis (7) and project towards the central axis (7) when viewed in cross-section.

4. System according to the preceding claim, **characterised in that** the inner lateral surface (5) is closed in cross-section.

5. System according to one of the two preceding claims, **characterised in that** the screw channel (4) provides a free space (8) in cross-section on both sides of the edge (6), respectively.

6. System according to claim 3, **characterised in that** exactly four edges (6) or at most eight edges (6) are provided.

7. System according to the preceding claim, **characterised in that** the edges (6) are of identical construction, have an identical distance (11) from the central axis (7) and/or are arranged at preferably identical angular distances from one another around the central axis (7).

8. System according to one of the five preceding claims, **characterised in that** the entire inner lateral surface (5) is point-symmetrical to the central axis (7) when viewed in cross-section.

9. System according to one of the six preceding claims, **characterised in that** the edge (6) is formed by two flat surfaces (9, 10) which are angled towards each other, and which meet to form the edge (6).

10. System according to one of the seven preceding claims, **characterised in that** the component (1) was produced by extrusion.

11. System according to one of the eight preceding claims, **characterised in that** the distance (11) from the edge (6) to the central axis (7) is at least 70% and/or at most 95% of half the nominal external thread diameter (12) of the screw (3).

12. System according to one of the nine preceding claims, **characterised in that** the distance (11) from the edge (6) to the central axis (7) is at least 86% or at least 102% and/or at most 108% or at most 117% of the half external thread core diameter (13) of the screw (3).

## Revendications

1. Procédé de fixation d'un autre élément de construction (2) sur un élément de construction (1) à l'aide d'une vis métrique ou en pouces (3), qui est destinée à être vissée dans un filetage métrique ou en pouces, dans lequel la vis (3) est fabriquée dans un métal qui a une dureté supérieure à celle de l'aluminium, dans lequel l'élément de construction (1) comprend un canal de vissage (4) qui est limité en section transversale par une surface d'enveloppe intérieure (5), dans lequel la surface d'enveloppe intérieure (5) présente une arête (6) qui s'étend parallèlement à un axe central (7) du canal de vissage (4) et qui, vue en section transversale, fait saillie vers l'axe central (7), à savoir qu'elle a la plus petite distance de l'axe central (7) de toute la surface d'enveloppe intérieure (5), dans lequel l'axe central (7) est perpendiculaire à la surface de l'élément de construction (1) à travers laquelle la vis (3) est vissée, dans lequel la vis (3) est tournée dans le canal de vissage (4) en direction de l'axe central (7) pour la fixation des deux éléments de construction (1, 2) et produit de cette manière un filetage intérieur dans l'arête (6), dans lequel l'élément de construction est fabriqué en aluminium ou en matière plastique renforcée par des fibres, dans lequel au moins trois arêtes (6) sont prévues, qui s'étendent parallèlement à l'axe central (7) et qui, vues en section transversale, font saillie vers l'axe central (7).

2. Procédé selon la revendication précédente, **caractérisé en ce qu'**une force manuelle est suffisante pour visser la vis (3) dans le canal de vissage (4).

3. Système comprenant un élément de construction (1), une vis métrique ou en pouces (3) destinée à être vissée dans un filetage métrique ou en pouces, dans lequel la vis (3) est fabriquée dans un métal qui a une dureté supérieure à celle de l'aluminium, ainsi qu'un autre élément de construction (2), dans lequel l'autre élément de construction (2) est fixé à l'élément de construction (1) à l'aide de la vis (3), dans lequel l'élément de construction (1) présente un canal de vissage (4) pour la fixation au moyen d'une vis (3), dans lequel le canal de vissage (4) est limité en section transversale par une surface d'enveloppe intérieure (5) et la surface d'enveloppe intérieure (5) présente une arête (6) qui s'étend parallèlement à un axe central (7) du canal de vissage (4) et qui, vue en section transversale, fait saillie vers l'axe central (7), à savoir qu'elle a la plus petite distance de l'axe central (7) de toute la surface d'enveloppe intérieure (5), dans lequel l'axe central (7) est perpendiculaire à la surface de l'élément de construction (1) à travers laquelle la vis (3) est vissée, dans lequel le système est tel que la vis métrique ou en pouces (3) a été tournée dans la direction de l'axe central (7) dans le canal de vissage (4) de l'élément de construction (1) pour la fixation de l'élément de construction (1), et produit de cette manière un filetage intérieur dans l'arête (6), dans lequel l'élément de construction est fabriqué en aluminium ou en matière plastique renforcée par des fibres, dans lequel au moins trois arêtes (6) sont prévues, qui s'étendent parallèlement à l'axe central (7) et qui, vues en section transversale, font saillie vers l'axe central (7).

4. Système selon la revendication précédente, **caractérisé en ce que** la surface d'enveloppe intérieure (5) est fermée en section transversale.

5. Système selon l'une des deux revendications précédentes, **caractérisé en ce que** le canal de vissage (4) prévoit en section transversale un espace libre (8) de chaque des deux côtés de l'arête (6).

6. Système selon la revendication 3, **caractérisé en ce qu'**il est prévu exactement quatre arêtes (6) ou au maximum huit arêtes (6).

7. Système selon la revendication précédente, **caractérisé en ce que** les arêtes (6) sont de construction identique, présentent une distance identique (11) à l'axe central (7) et/ou sont disposées à des distances angulaires de préférence identiques les unes par rapport aux autres autour de l'axe central (7).

8. Système selon l'une des cinq revendications précédentes, **caractérisé en ce que** l'ensemble de la surface d'enveloppe intérieure (5), vue en section transversale, présente une symétrie ponctuelle par rapport à l'axe central (7).

9. Système selon l'une des six revendications précédentes, **caractérisé en ce que** l'arête (6) est formée par deux surfaces (9, 10) planes et inclinées l'une par rapport à l'autre, qui se rencontrent en formant l'arête (6).

10. Système selon l'une des sept revendications précédentes, **caractérisé en ce que** l'élément de construction (1) a été fabriqué par presse d'extrusion ou par extrusion.

11. Système selon l'une des huit revendications précédentes, **caractérisé en ce que** la distance (11) de l'arête (6) à l'axe central (7) est au moins de 70% et/ou au plus de 95% du demi-diamètre nominal de filetage extérieur (12) de la vis (3).

12. Système selon l'une des neuf revendications précédentes, **caractérisé en ce que** la distance (11) de l'arête (6) à l'axe central (7) est au moins de 86% ou au moins de 102% et/ou au plus de 108% ou au plus de 117% du demi-diamètre de cœur de filetage extérieur (12) de la vis (3).
